# EUROPÄISCHE PATENTSCHRIFT

(11) **EP 1 452 276 B1**
(45) Veröffentlichungstag und Bekanntmachung des Hinweises auf die Patenterteilung: **29.12.2010**
(21) Anmeldenummer: 04100747.7
(22) Anmeldetag: 26.02.2004
(51) Int. Cl.: B25B 21/02

(54) **Haltevorrichtung für Befestigungsmittel**
Fastener holding device
Dispositif de support pour éléments de fixation

(30) Priorität: 28.02.2003 DE 10309133
(43) Veröffentlichungstag der Anmeldung: 01.09.2004
(73) Patentinhaber: HILTI Aktiengesellschaft, 9494 Schaan (LI)
(72) Erfinder: Bader, Thomas, 86899 Landsberg (DE)
(74) Vertreter: Wildi, Roland

(56) Entgegenhaltungen:
- FR-A1- 2 712 521
- GB-A- 589 025
- US-A- 1 424 703
- US-A- 1 575 149
- US-A- 4 060 114
- US-A- 5 733 089

## Beschreibung

Die Erfindung betrifft eine Haltevorrichtung zur Halterung von Befestigungsmitteln, wie Schrauben, die an einem Schraubgerät festlegbar ist und mit der ein einzutreibendes Befestigungsmittel, das beispielsweise von einer Vorderseite des Schraubgerätes her in ein Werkzeugbit einsetzbar ist, zusätzlich abstützbar ist, wobei die Haltevorrichtung mindestens zwei Greifelemente aufweist, die in einer Stützstellung an einem Schaft des Befestigungsmittels anlegbar sind und die durch eine Kraftbeaufschlagung in eine Freigabestellung verlegbar sind, in der sie vom Schaft beabstandet sind.

Derartige Halteeinrichtungen ermöglichen ein selbsttätiges Halten der Befestigungsmittel an dem Schraubgerät und erleichtern dadurch den Schraubvorgang erheblich. Vor allem beim Befestigen langer Selbstbohrschrauben an empfindlichen Oberflächen, wie beispielsweise lackierten Metallblechen von Sandwichelementen, wie sie im Metallbau für Fassaden oder Blechdächer Verwendung finden, sind solche Halteeinrichtungen sehr vorteilhaft, da sie die Schrauben radial Abstützen und dadurch ein Taumeln der Schrauben und daraus resultierende Beschädigungen an den Oberflächen vermeiden. Zudem kann in vielen Fällen auf ein zeitaufwendiges Vorbohren verzichtet werden. Insgesamt wird durch die Halteeinrichtungen somit der Schraubvorgang vereinfacht und Beschädigungen an den Montagewerkstücken vermieden.

Aus der US 1 424 703 ist ein Schraubendreher mit Haltemitteln für eine Schraube bekannt, die zwei jeweils am Ende eines Schwenkarmes angeordnete Klauen zum vorübergehenden Halten einer Schraube aufweist. Die Schwenkarme sind dabei an einer Hülse gelagert, die ihrerseits auf einer innenliegenden weiteren Hülse gelagert ist. Wird eine Schraube mit dem Schraubendreher in ein Werkstück eingeschraubt, dann wird diese zunächst über die beiden Klauen gehalten. Bei fortschreitendem Einschrauben der Schraube drückt die Innenhülse mit den sich an ihrem der Schraube zugewandten Ende befindlichen Vorsprüngen von innen gegen die Schwenkarme und spreizt diese auf, wobei die Schraube freigegeben wird.

DE 40 37 547 zeigt eine Vorrichtung zur Halterung von Schrauben, die über ein hülsenförmiges Bauteil an einem Schraubgerät festgelegt ist. Ein ebenfalls hülsenförmiges Tragteil ist teleskopartig an dem Bauteil geführt und trägt zwei, jeweils um einen Stift drehbare Greifelemente in Form von Haltebacken, die in Ruhestellung in etwa senkrecht zur Innenwand des Tragteils nach innen ragen und dabei mit ihren freien Enden den Schaft einer Schraube abstützen. Beim Eintreiben der Schraube kommt die in Arbeitsrichtung stehende Frontseite des Tragteils in Anlage mit dem Werkstück, in das die Schraube eingetrieben wird. Beim weiteren Schraubvorgang wird das Tragteil durch den Gegendruck des Werkstückes gegenüber dem Bauteil sowie gegenüber der Schraube verschoben. Hierdurch kommt der Schrau-benkopf in Anlage mit den Haltebacken, der diese in Richtung des Werkstückes aus dem Eintriebspfad der Schraube heraus verschwenkt.

Um zu gewährleisten, dass die Schraube bis zum Anschlag in das Werkstück eingetrieben werden kann, ist es hierbei notwendig, dass die Haltebacken in Eintreibrichtung vollständig hinter die Stirnseite des Werkzeugbits verschoben werden. Die bekannte Vorgehensweise hat dabei den Nachteil, dass unter anderem die komplette Länge der Haltebacken als Verschiebungslänge des Tragteils gegenüber dem Bauteil vorgehalten werden muss. Als Folge hiervon ist es notwendig, die Spindel des Schraubgerätes über eine spezielle Verlängerung mit dem Werkzeugbit zu verbinden beziehungsweise ein speziell ausgeformtes, langes Werkzeugbit zu verwenden. Hierdurch werden zusätzliche Kosten verursacht.

Vor allem aber für die Montage von Schrauben mit einem grossen Kopf oder einer grösseren Unterleg- oder Dichtscheibe ist die bekannte Lösung unbrauchbar. In diesen Fällen müssen nämlich besonders lange Haltebacken verwendet werden, was wiederum eine besonders grosse Verschiebungslänge und damit eine besonders unhandliche Baulänge der Haltevorrichtung zur Folge hat. Zudem müssen derartig lange Haltebacken relativ aufwendig ausgeführt sein, um eine ausreichende Stabilität beim Abstützen des Schraubenschaftes zu gewährleisten.

Weitere Nachteile der bekannten Haltevorrichtung ergeben sich aus der hülsenförmigen Bauweise, die nur eine sehr eingeschränkte Sicht auf die Schraube ermöglicht. Zudem erzeugt diese Bauweise ein relativ hohes Gewicht, das wegen der Anordnung der Vorrichtung am vorderen Ende des Schraubgerätes zu einer ungünstigen Gewichtsverteilung und damit zu einem schlechten Handling des Schraubgerätes führt. Insbesondere bei der Verschraubung von Fassaden kann eine solche schlechte Balance des Schraubgerätes sehr hinderlich sein.

Der vorliegenden Erfindung liegt die Aufgabe zugrunde, eine Haltevorrichtung für Schrauben bereitzustellen, die die vorgenannten Nachteile vermeidet und einen einfachen Aufbau von geringer Länge aufweist.

Erfindungsgemäss wird die Aufgabe durch die Merkmale im kennzeichnenden Teil des Anspruchs gelöst.

Auf diese Weise kommen die Greifelemente selbst in Anlage mit dem Werkstück, in das das Befestigungsmittel eingetrieben wird. Somit erfolgt die Kraftbeaufschlagung zur Verlegung der Greifelemente in die Freigabestellung direkt durch das Werkstück. Hierdurch lässt sich die Baulänge der Haltevorrichtung bei einfacher Bauweise verkürzen. Zudem wird durch die direkte Beaufschlagung der Greifelemente durch das Werkstück eine sichere und rechtzeitige Betätigung der Greifelemente gewährleistet.

Von Vorteil ist, wenn der wenigstens eine Kontaktbereich durch mindestens eine Rolle gebildet ist. Durch derartige Rollen wird einerseits eine reibungsarme Radialbewegung der Greifelemente an der Werkstückoberfläche im Verhältnis zur Eintreibachse ermöglicht, was den Kraftaufwand bei der Betätigung der Greifeinrichtung reduziert. Andererseits können Kratzspuren oder sonstige Beschädigungen an dem Werkstück vermieden werden, insbesondere dann, wenn die Rollen zumindest an ihrer Mantelfläche ein weiches Material wie etwa Gummi oder weichen Kunststoff aufweisen.

Vorteilhafterweise ist die Rolle ballig ausgeformt. Hierdurch wird vermieden, dass die Rollen, insbesondere bei einem schrägen Aufsetzen der Haltevorrichtung auf eine Werkstücksoberfläche, Eindrückspuren durch Rollenkanten verursachen.

Vorzugsweise sind die Greifelemente durch Greifarme gebildet, die jeweils zum einen über ein Drehlager gehalten sind, das gegenüber einem Getriebeteil des Schraubgerätes in dessen Eintreibrichtung axial verschieblich ist. Zum anderen erfolgt die Lagerung der Greifarme jeweils über eine Kulissenführung. Durch diese Lagerung ist es möglich, die Greifelemente derart zu bewegen, dass sie einerseits in radialer Richtung den Eintreibpfad der zu montierenden Schraube freigeben und andererseits in axialer Richtung hinter die Stirnseite des Werkzeugbits in Eintreibrichtung verbracht werden. Sowohl die axiale als auch die radiale Wegkomponente wird dabei durch eine einförmige Bewegung der Greifelemente vollzogen, wodurch der Gesamtaufbau der Haltevorrichtung stark vereinfacht werden kann. Zudem kann durch die Verwendung von Greifarmen ein relativ filigraner Aufbau erzielt werden, der ein geringes Gewicht der Haltevorrichtung sowie eine gute Einsichtnahme auf das einzutreibende Befestigungsmittel gewährleistet.

In einer besonders vorteilhaften Ausführungsform weist die die Kulissenführung mindestens eine gekrümmte Führungsausnehmung, beispielsweise in Form eines Langloches oder einer Nut, an dem jeweiligen Greifelement auf. In diese Führungsausnehmung ragt ein Führungselement, das bewegungsfest mit dem Getriebeteil verbunden ist. Eine derartige Anordnung ermöglicht eine genaue und stabile Verstellung der Greifelemente zwischen der Stützstellung und der Freigabestellung entlang dem gekrümmten Bewegungspfad.

Vorzugsweise ist die Führungsausnehmung zu einem ersten Ende hin am stärksten gekrümmt, an dem das Führungselement platziert ist, wenn die Greifelemente in der Stützstellung stehen. Durch diese starke Krümmung der Kulissenführung im Bereich, der der Stützstellung entspricht, erzielt man beim Drücken des Kontaktbereichs der Greifelemente gegen das Werkstück ein besonders schnelles und ausgeprägtes Öffnen der Greifelemente. Auf diese Weise ist eine besonders kurze Baulänge der Haltevorrichtung möglich.

Hierbei ist es von Vorteil, wenn das erste Ende durch einen geraden Endabschnitt ausgeformt ist und dieser Endabschnitt in der Stützstellung der Haltevorrichtung im Wesentlichen parallel zur Eintreibrichtung ausgerichtet ist. Hierdurch werden die Greifelemente während des Schraubvorganges sicher geschlossen gehalten, solange der Kontaktbereich noch nicht an dem jeweiligen Werkstück in Anlage gekommen ist. Somit wird ein versehentliches Offnen der Haltevorrichtung beispielsweise aufgrund von Vibrationen, die während des Schraubvorganges auftreten, vermieden.

Günstig ist es ferner, wenn die Führungsausnehmung zu einem zweiten Ende hin einen geraden Abschnitt aufweist, an dem das Führungselement platziert ist, wenn die Greifelemente in der Freigabestellung stehen. Hierdurch erreicht man, dass die Greifelemente nach ihrem Öffnen auf möglichst direktem Weg in Eintreibrichtung hinter die Stirnseite des Werkzeugbits verlagert werden, damit das Befestigungsmittel bis zum Anschlag in das betreffende Werkstück eingeschraubt werden kann.

Zudem ist vorteilhafterweise der mindestens eine Kontaktbereich der Greifelemente in Längsrichtung des geraden Abschnitts, d.h. in dessen fiktiver Verlängerung, angeordnet. Hierdurch werden Querkräfte innerhalb der Greifelemente vermieden, wodurch eine schlankere Ausformung der Greifelemente möglich ist.

In einer besonders vorteilhaften Ausführungsform weist die Haltevorrichtung eine Rasteinrichtung auf. Mit dieser können die Greifelemente in einer vorbestimmten Rastposition eingerastet werden. Zum Lösen der Verrastung ist eine geringe zusätzliche Kraftbeaufschlagung in Form von zusätzlichem Druck zwischen dem Kontaktbereich der Greifelemente und dem Werkstück notwendig. Hierdurch ist es möglich eine genaue Position der Greifelemente in der Stützstellung vorzubestimmen. Zudem wird die Gefahr eines versehentlichen Öffnens der Greifeinrichtung vermindert.

Hierbei ist es besonders vorteilhaft, wenn die vorbestimmte Rastposition der Rasteinrichtung verstellbar ist. Hierdurch ist es möglich die Position der Greifelemente in der Stützstellung auf verschiedene Schaftdurchmesser der einzutreibenden Befestigungsmittel einzustellen.

Vorteilhafterweise ist die Rasteinrichtung durch ein gegenüber dem Getriebeteil in verschiedenen Positionen festlegbares Rastaufnahmeelement gebildet, an dem ein Schiebeelement entlang geführt ist, das die Drehlager der Greifelemente trägt und gegenüber dem Getriebeteil axial verschieblich ist. Das Rastaufnahmeelement weist eine Ausnehmung auf. In diese Ausnehmung greift in der Stützposition der Greifelemente ein Rastelement, das an dem Schiebeelement verschieblich gehalten und in Richtung des Rastaufnahmeelementes vorgespannt ist. Hierdurch erhält man einen einfachen und kostengünstigen Aufbau der verstellbaren Rasteinrichtung.

Vorzugsweise sind die Greifelemente in die Freigabestellung vorgespannt. Auf diese Weise erreicht man, dass die Greifelemente selb stständig in die Freigabestellung geführt werden und somit der Kontaktbereich der Greifelemente in Eintreibrichtung hinter die Bitstirnseite des Werkzeugbits verschoben werden, sobald die Rasteinrichtung aus der Stützstellung gelöst wird. Hierdurch wird ein unnötiger Kontakt zwischen den Greifelementen und dem Werkstück und dadurch mögliche Beschädigungen wie beispielsweise Kratzspuren an dem Werkstück vermieden.

Günstig ist es, wenn die Vorspannung durch eine Schraubenfeder erfolgt, die auf dem Rastelement sitzt und zwischen dem Schiebeelement und dem Getriebeteil, beziehungsweise einem an diesem festgelegten Bauteil, angeordnet ist. Hierdurch wird das Rastaufnahmeelement zusätzlich als Führung für die Vorspannfeder genutzt, wodurch zusätzliche Bauteile eingespart werden können.

Vorteilhafterweise ist an mindestens einem Greifelement in einem Bereich, der an den Schaft des Befestigungsmittels anlegbar ist, eine Greifbacke angeordnet. Zwischen der Greifbacke und der Führungsausnehmung weist das Greifelement zudem einen federnden Bereich auf, beispielsweise in Form einer integrierten Blattfeder. Durch den federnden Bereich erfolgt beim Verbringen der Haltevorrichtung in die Stützstellung eine selbsttätige Anpassung der Greifarme an den jeweiligen Schaftdurchmesser. Auf eine manuelle Einstellung der Rasteinrichtung kann somit verzichtet werden. Zudem ist es denkbar, dass der Federbereich so ausgebildet ist, dass er in Verbindung mit dem geraden Endabschnitt eine zusätzliche oder eigene Rastfunktion in der Stützstellung übernimmt. Auf diese Weise kann gegebenenfalls auf die Rasteinrichtung verzichtet werden.

Ferner ist es günstig, wenn die Greifbacke mit dem übrigen Greifelement lösbar verbunden ist. Hierdurch ist es möglich, eine Greifbacke, die Verschleisserscheinungen zeigt, auszutauschen, ohne dass das gesamte Greifelement ausgetauscht werden muss. Zudem ist es hierdurch möglich, wahlweise unterschiedlich ausgeformte Greifbacken zu verwenden, die beispielsweise runde oder keilförmige Ausnehmungen in verschiedenen Grössen ausformen oder die aus Materialien mit unterschiedlichen Reibungseigenschaften bestehen.

In einer bevorzugten Ausführungsform weist die Greifbacke eine keilförmige Ausnehmung auf. Durch eine derartige beispielsweise prismenförmige Greifbacke wird sichergestellt, dass jedes Gr eifelement über zwei Kontaktlinien an dem Schaft des einzutreibenden Befestigungsmittels anliegt und zwar unabhängig vom Durchmesser des Schaftes. Hierdurch kann eine sichere Führung des Schaftes durch die Greifelemente gewährleistet werden.

Vorzugsweise ist ein Werkzeugbit vorgesehen, das eine Klemmvorrichtung aufweist. Durch diese Klemmvorrichtung wird beim Einstecken eines Befestigungsmittels in die Haltevorrichtung ei n Reibschluss zwischen dem Werkzeugbit und dem Kopf des Befestigungsmittels erzeugt. Hierdurch ist es möglich beispielsweise eine einzutreibende Schraube zunächst mit dem Schraubenkopf in das Werkzeugbit zu stecken. Diese wird dann selbstständig in dem Werkzeugbit gehalten, während die bedienende Person beide Hände frei hat, um die Greifelemente aus der Freigabestellung in die Stützstellung zu verschieben, in der die Greifelemente an dem Schaft der Schraube anliegen.

Die Erfindung wird nachstehend anhand eines Ausführungsbeispieles näher erläutert. Es zeigen:
- Fig. 1: eine Ansicht des Getriebeteils eines Schraubgerätes mit einer daran angebrachten Haltevorrichtung in einer Freigabestellung,
- Fig. 2: eine Ansicht des Getriebeteils und der Haltevorrichtung nach Fig.1 in einer Stützposi- tion,
- Fig. 3: eine Ansicht des Getriebeteils mit daran angebrachter in der Ebene III-III der Fig. 2 geschnitten dargestellter Haltevorrichtung,
- Fig. 4: eine perspektivische Teildarstellung des Schraubgerätes mit daran angebrachter Hal- tevorrichtung in der Stützstellung,
- Fig. 5: einen Schnitt durch eine Rasteinrichtung in der Stützposition,
- Fig. 6: einen Schnitt durch die Rasteinrichtung nach Fig. 5 in Freigabeposition und
- Fig.7: eine Ansicht des Getriebeteils mit einer alternativen Haltevorrichtung mit teilentfern- tem Tragelement und teilentfernter Rolle, in der Stützposition.

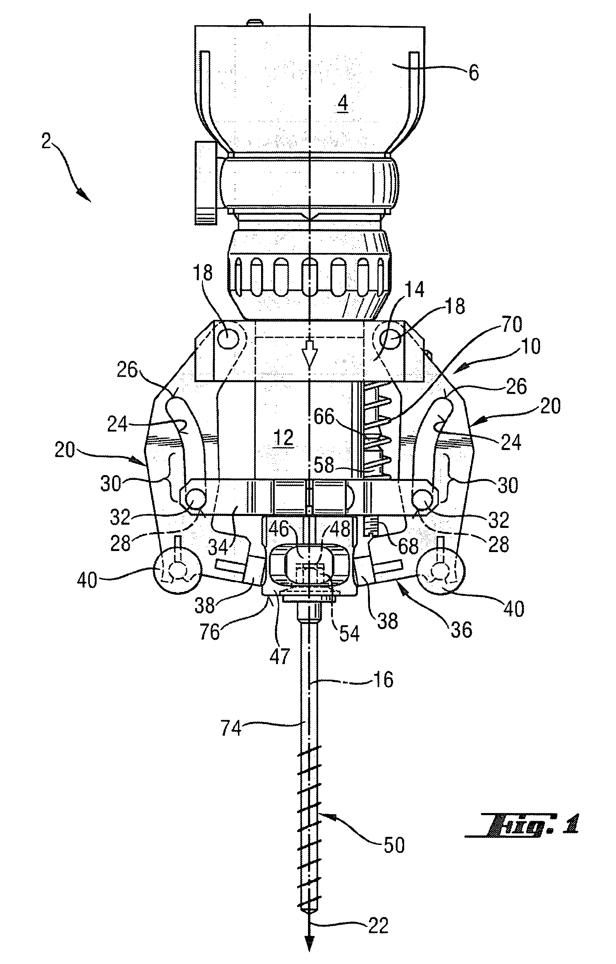

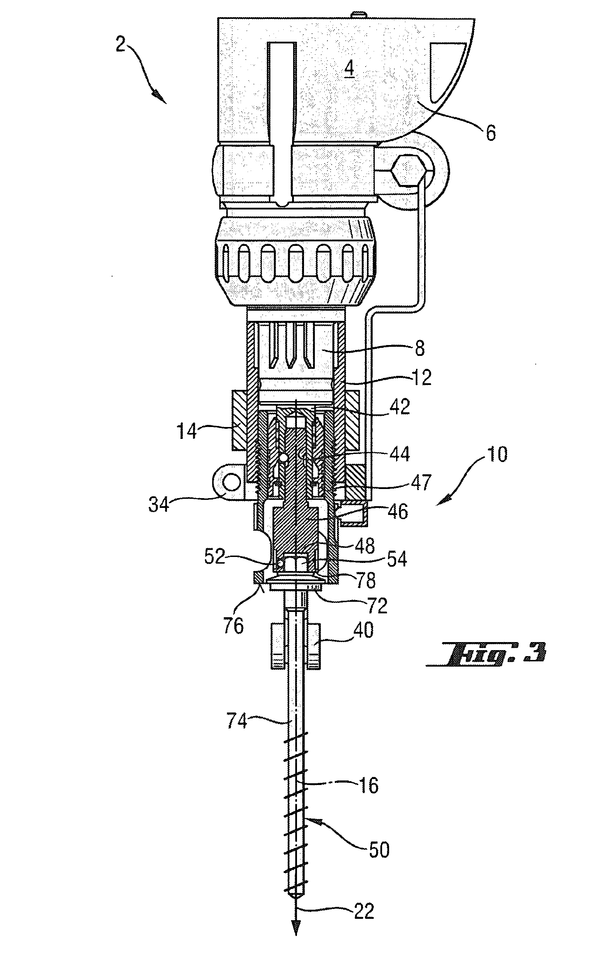

In den Fig. 1 bis 4 ist der vordere Teil eines Schraubgerätes 2 mit einem Getriebeteil 4 dargestellt, das ein Getriebegehäuse 6 aufweist. Das Getriebeteil 4 weist ein Aufsteckende 8 (siehe Fig. 3) auf, an dem eine Haltevorrichtung 10 über eine Trägerhülse 12 montiert ist. Auf der Trägerhülse 12 ist ein Schiebeelement 14 entlang einer Eintreibachse 16 verschiebbar gelagert. An dem Schiebeelement 14 sind zwei Drehlager 18 ausgeführt, über die jeweils ein als Greifarm ausgeformtes Greifelement 20 mit seinem in Eintreibrichtung 22 hinteren Ende gegenüber dem Schiebeelement 14 und dem Getriebeteil 4 drehbar gelagert ist.

An den Greifelementen 20 ist jeweils eine Führungsausnehmung 24 in Form eines gekrümmten Langloches ausgeformt. Die Führungsausnehmung 24 ist zu einem ersten Ende 26 hin stark gekrümmt. Zu einem zweiten Ende 28 hin weist die Führungsausnehmung 24 dagegen einen geraden Abschnitt 30 auf. In die Führungsausnehmungen 24 der beiden Greifelemente 20 greift jeweils ein Führungselement 32 in Form eines Stiftes. Beide Führungselemente sind dabei an einem Tragelement 34 angeordnet, das fest auf ein in Eintreibrichtung 22 vorderes Ende der Trägerhülse 12 montiert ist. Beide Führungsausnehmungen 24 bilden auf diese Weise mit dem jeweiligen Führungselement 32 eine Kulissenführung.

An dem vom Drehlager 18 abgewandten jeweiligen Ende beider Greifelemente 20 weisen diese jeweils eine Backenaufnahme 36 auf, in der eine Greifbacke 38 lösbar befestigt ist. Neben der Greifbacke 38 weisen beide Greifelemente 20 in Verlängerung des geraden Abschnitts 30 der Führungsausnehmung 24 jeweils eine Rolle 40 auf, die an dem jeweiligen Greifelement 20 drehbar gelagert ist.

Wie aus dem geschnittenen Bereich in Fig. 3 zu entnehmen ist, ragt innerhalb der Trägerhülse 12 aus dem Aufsteckende 8 des Getriebeteils 4 ein Spindelende 42 des Schraubgerätes 2 heraus. An diesem Spindelende 42 ist eine Bitaufnahme 44 ausgeformt, in der ein Werkzeugbit 46 eingesetzt ist. Ferner ist in die Trägerhülse 12 ein Tiefenanschlag 47 eingeschraubt, der je nach Bedarf auch entfernt werden kann.

Das Werkzeugbit 46 weist wiederum in Eintreibrichtung 22 eine Sechskantaufnahme 48 auf, an der ein Befestigungsmittel 50 in Form einer Schraube eingesetzt ist. Um ein selbsttätiges Halten des Befestigungsmittels 50 an dem Werkzeugbit 46 zu ermöglichen, ist an dem Werkzeugbit 46 eine federbelastete Kugel 52 ausgeführt, die durch eine seitliche Öffnung in die Sechskantaufnahme 48 hinein gedrückt wird. Dabei drückt die Kugel 52 gegen einen Sechskant-Kopf 54 des Befestigungsmittels 50, der im eingesetzten Zustand des Befestigungsmittels 50 in der Sechskantaufnahme 48 positioniert ist, und klemmt auf diese Weise das Befestigungsmittel 50 an dem Werkzeugbit 46 fest.

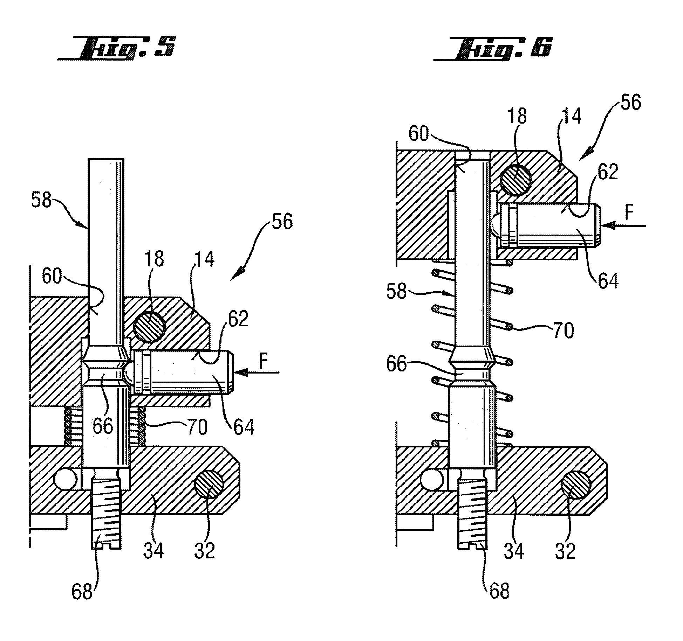

In den Fig. 5 und 6 ist eine Rasteinrichtung 56 näher dargestellt, die ein Rastaufnahmeelement 58 in Form eines Stiftes aufweist, der am Tragelement 34 eingespannt ist und in eine Führungsbohrung 60 ragt beziehungsweise diese durchgreift, die an dem Schiebeelement 14 ausgeformt ist. Quer zu der Führungsbohrung 60 ist eine Aufnahmebohrung 62 ausgeformt, die zu der Führungsbohrung 60 hin geöffnet ist. In der Aufnahmebohrung ist ein Rastelement 64 angeordnet, das in Richtung der Führungsbohrung 60 durch eine lediglich schematisch dargestellte Federkraft F vorgespannt ist.

Fig. 5 zeigt die Rasteinrichtung 56 in einer Einrastposition, die der Stützstellung der Greifelemente 20 entspricht. Dabei ragt das Rastelement 64 in eine Ausnehmung 66 in Form einer Einschnürung, die an dem Rastaufnahmeelement 58 ausgeformt ist. Hierdurch wird das Schiebeelement 14 gegenüber dem Tragelement 34 in einem vorbestimmten Abstand gehalten. Wie Fig. 5 weiter zu entnehmen ist, ist an dem dem Tragelement 34 zugewandten Ende des Rastaufnahmeelementes 58 eine Stellschraube 68 vorgesehen. Über diese Stellschraube 68 lässt sich der Abstand, den das Schiebeelement 14 gegenüber dem Tragelement 34 in der Einrastposition einnimmt, einstellen beziehungsweise verändern.

Zudem ist auf dem Rastaufnahmeelement 58 eine Schraubenfeder 70 geführt, die das Schiebeelement 14 von dem Tragelement 34 weg drückt. Im unbelasteten Zustand der Schraubenfeder 70 ist somit das Schiebeelement 14 vom Tragelement 34 weg bewegt, wodurch die Haltevorrichtung 10 die Freigabeposition (Fig. 6) einnimmt, in der die Greifelemente 20 geöffnet sind. In dieser Freigabeposition kann somit ein Befestigungselement 50 mit seinem Sechskant-Kopf 54 ungehindert von der Vorderseite des Schraubgerätes 2 in das Werkzeugbit 46 gesteckt werden. Die federbelastete Kugel 52 verhindert dabei ein ungewolltes Herausfallen des Befestigungselementes 50 aus dem Werkzeugbit 46.

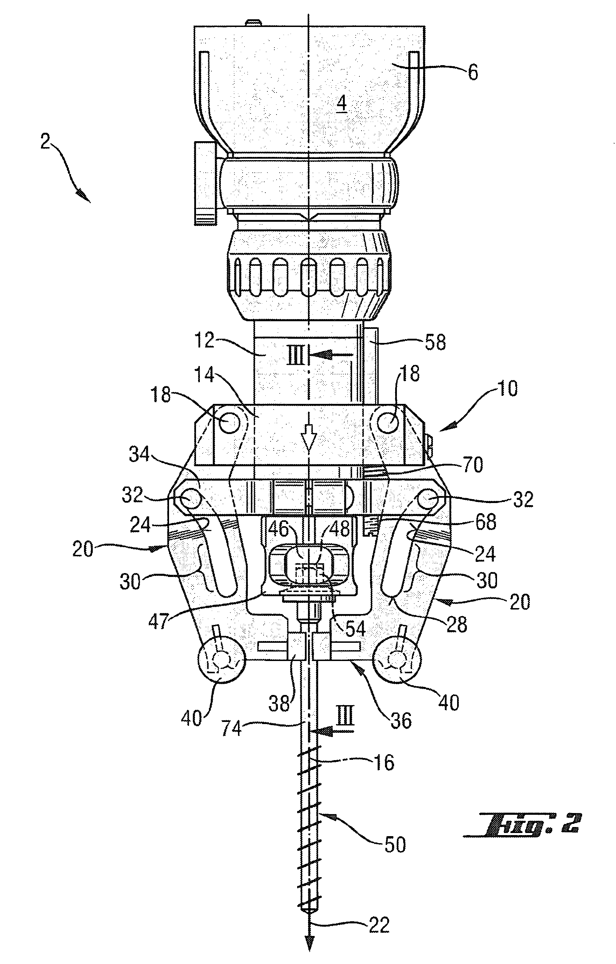

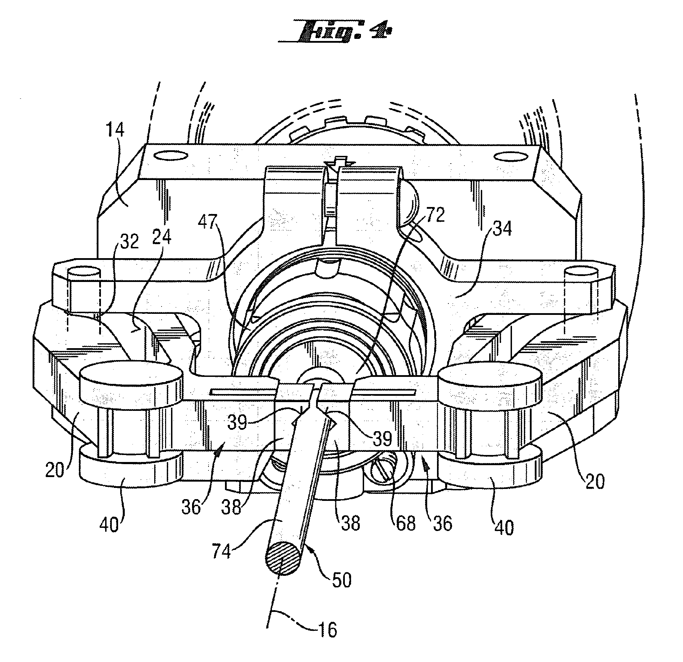

Die bedienende Person hat somit beide Hände frei, um einerseits das Schraubgerät 2 zu halten und andererseits das Schiebeelement 14 entgegen der Federkraft der Schraubenfeder 70 soweit in Richtung des Tragelementes 34 zu schieben, bis das Rastelement 64 wie in Fig. 5 dargestellt in die Ausnehmung 66 einrastet. Die Haltevorrichtung 10 nimmt nun die in den Fig. 2 und 4 gezeigte Stützstellung ein, in der die Schraubenfeder 70 vorgespannt ist. Dabei liegen die Greifbacken 38 der Greifelemente 20 unterhalb des Sechskant-Kopfes 54 und einer Dichtscheibe 72 an einem Schaft 74 des Befestigungsmittels 50 an. Wie aus Fig. 4 zu entnehmen ist, sind die Greifbacken 38 prismenförmig mit einer im Querschnitt dreieckförmigen Ausnehmung 39 ausgebildet und liegen dadurch jeweils über zwei Berührungslinien an dem Schaft 74 an.

Um einerseits eine gute radiale Abstützung des Schaftes 74 durch die Greifelemente 20 zu gewährleisten und andererseits eine unnötig grosse Reibung durch Anpresskräfte der Greifelemente 20 zu vermeiden, kann der Abstand zwischen den beiden Greifbacken 38 in der Stützposition über die Stellschraube 68 der Rasteinrichtung 56 genau eingestellt werden. Die bedienende Person legt dabei über die Stellschraube 68 den Abstand zwischen Schiebeelement 14 und Tragelement 34 und damit auch den Anlagepunkt des Führungselementes 32 an der Führungsausnehmung 24 in der Stützstellung fest. Hierdurch wird wiederum der Abstand zwischen den Greifbacken 38 bestimmt, der als Führungsbereich für den Schaft 74 in der Stützstellung dient. Die bedienende Person wird diesen Abstand in der Regel so wählen, dass die Greifbacken 38 in der Stützstellung gerade ohne Spiel an dem Schaft 74 anliegen.

Wegen der lösbaren Befestigung der Greifbacken 38 in den Backenaufnahmen 36 ist es ferner auch möglich wahlweise Greifbacken 38 mit verschiedenen Formen zu verwenden. Beispielsweise könnte statt den dargestellten Greifbacken 38 mit einer dreieckförmigen Ausnehmung auch Greifbacken mit einer runden Ausnehmung gewählt werden, um eine verbesserte Führung des Schaftes 74 zu erzielen.

Sobald die Greifelemente 20 an dem Schaft 74 angelegt sind, kann nun der Schraubvorgang erfolgen. Hierzu wird das Schraubgerät 2 eingeschaltet und das Befestigungselement 50 in Eintreibrichtung 22 in das nicht dargestellte Werkstück eingetrieben. Die Greifelemente 20 stützen den Schaft 74 in radialer Richtung und sorgen somit auch bei einer grossen Länge des Befestigungsmittels 50 für eine sichere Führung. Das Befestigungsmittel 50 kann daher auch ohne Vorbohren taumelfrei in das Werkstück eingetrieben werden.

Wie insbesondere aus Fig. 2 zu entnehmen ist, bilden in der Führungsstellung die Rollen 40 der Greifelemente 20 in Eintreibrichtung 22 den vorderste n Anschlag der Anordnung aus Schraubgerät 2 und Haltevorrichtung 10. Dies hat zur Folge, dass die Rollen 40 bei entsprechender Einschraubtiefe des Befestigungsmittels 50 als erstes gegen das Werkstück gedrückt werden.

Durch den Druck auf die Rollen 40 der Greifelemente 20 werden diese zusammen mit dem Schiebeelement 14 gegenüber der Trägerhülse 12 und dem Werkzeugbit 46 entgegen der Eintreibrichtung 22 nach hinten verschoben. Hierbei wird das Rastelement 64, das zusammen mit dem Schiebeelement 14 verschoben wird, aus dem Eingriff mit der Ausnehmung 66 des Rastaufnahmeelementes 58 bewegt und dadurch die Rasteinrichtung 56 gelöst. Infolge der Federkraft der Schraubenfeder 70 wird daraufhin das Schiebeelement 14 zusammen mit den Greifelementen 20 selbsttätig, d.h. auch ohne weiteren Druck auf die Rollen 40 entgegen der Eintreibrichtung 22 nach hinten verschoben.

Dabei wird zunächst der stark gekrümmte Teil der Führungsausnehmungen 24 der Greifelemente 20 an dem Führungselement 32 entlang bewegt. Dies sorgt gleichzeitig mit der axialen Bewegung der Greifelemente 20 entlang der Eintreibachse 16 für ein rasches Verschwenken der Greifelemente 20 um das jeweilige Drehlager 18 und damit für eine ausgeprägte radiale Beabstandung der Greifbacken 38 voneinander. Im weiteren Verlauf der Verschiebung der Greifelemente 20 gegenüber dem Werkzeugbit 46 werden diese entlang dem geraden Abschnitt 30 im Wesentlichen parallel zur Eintreibachse 16 und damit auf kürzestem Wege nach hinten verschoben. Der Abstand zwischen den Greifbacken 38 ist dabei bereits so gross, dass diese entgegen der Eintreibrichtung 22 über die Dichtscheibe 72 verschoben und neben dem Tiefenanschlag 47 beziehungsweise dem Werkzeugbit 46 platziert werden können.

Wie aus Fig. 1 zu entnehmen ist, bilden daraufhin nicht mehr die Greifelemente 20 mit ihren Rollen 40 den in Eintreibrichtung vordersten Anschlag, sondern eine Stirnseite 76 des Tiefenanschlags 47. Somit kann das Befestigungsmittel 50 bis zur Anlage des Tiefenanschlages 47 an das Werkstück in dieses eingetrieben werden.

Bei entferntem Tiefenanschlag 47 wird der vorderste Anschlag der Anordnung aus Schraubgerät 2 und Haltevorrichtung 10 durch eine Bitstirnseite 78 des Werkzeugbits 46 (siehe Fig. 3) gebildet. In diesem Fall kann das Befestigungsmittel 50 bis zum Anschlag der Dichtscheibe 72 in das Werkstück eingetrieben werden.

Im Anschluss an das Einschrauben des Befestigungsmittels 50 wird der Reibschluss zwischen der federbelasteten Kugel 52 und dem Sechskant-Kopf 54 des Befestigungsmittels 50 durch leichten Zug am Schraubgerät 2 entgegen der Eintreibrichtung 22 überwunden und das Schraubgerät 2 vom Befestigungsmittel 50 getrennt. Die Schraubenfeder 70 hält dabei die Haltevorrichtung 10 in der Freigabestellung gemäss Fig. 1.

Für einen erneuten Einschraubvorgang kann somit ein neues Befestigungsmittel 50 von der im Verhältnis zur Eintreibrichtung 22 betrachteten Vorderseite des Schraubgerätes 2 mit dem Sechskant-Kopf 54 in das Werkzeug bit 46 eingesteckt werden. Durch Verschieben des Schiebeelementes 14 in Eintreibrichtung 22 können daraufhin die Greifbacken 38 zur Führung des neuen Befestigungsmittels 50 wie oben beschrieben an dessen Schaft 74 angelegt werden.

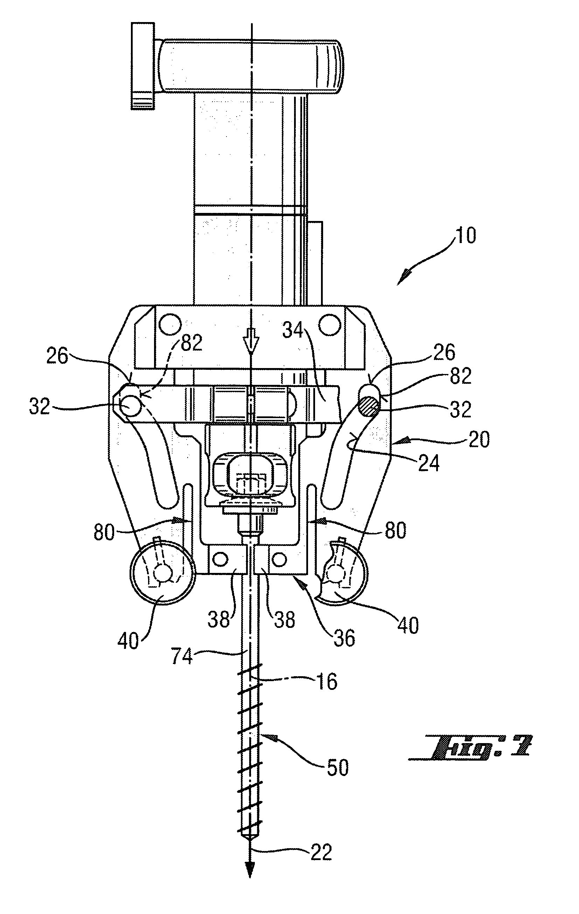

Fig. 7 zeigt eine alternative Ausführungsform der Haltevorrichtung 10, bei der die Greifelemente 20 einen Federbereich 80 aufweisen, über den die Greifbacken 38 und die Backenaufnahmen 36 gegenüber dem übrigen Teil der Greifelemente 20, an dem die Führungsausnehmung 24 ausgebildet ist, in radialer Richtung zur Eintreibachse 16 federnd gehalten sind. Der Federbereich 80 ist dabei als integrierte Blattfeder in den als Spritzgussteil ausgeführten Greifelementen 20 ausgebildet. Zudem weist die Führungsausnehmung 24 in dieser Ausführungsform am ersten Ende 26 einen Endabschnitt 82 auf, der in der Stützstellung von dem gekrümmten Bereich der Führungsausnehmung 24 weg, je nach Durchmesser des Schaftes 74 des jeweiligen Befestigungsmittels 50, in etwa parallel zur Eintreibachse 16 ausgerichtet ist.

Zur besseren Darstellung ist eine der Rollen 40 und das Tragelement 34 nur teilweise dargestellt.

Beim Anlegen der Greifbacken 38 an den Schaft 74 wird die Führungsausnehmung 24 im Endabschnitt 82 an das Führungselement 32 angelegt. Gleichzeitig werden die Greifbacken 38 sobald sie mit dem Schaft 74 in Anlage gekommen sind, je nach Durchmesser des Schaftes 74, verschieden stark gegenüber dem übrigen Greifelement 20 verschwenkt. Somit stellt sich die Haltevorrichtung 10 beim Verbringen in die Stützstellung selbständig auf den jeweiligen Durchmesser des Schaftes 74 ein. Durch die Federwirkung des Federbereiches 80 werden dabei die Haltekräfte limitiert, wodurch die Oberfläche des Schaftes 74, die beispielsweise einen Korrosionsschutz aufweisen kann, während dem Schraubvorgang geschont wird.

Während dem Schraubvorgang sorgen die gefederten Greifbacken 38 für einen Ausgleich von radialen Bewegungen des Schaftes 74, die infolge von Exzentrizitäten, beispielsweise an der Befestigungsmittelspitze oder entlang des Schaftes 74, auftreten können. Die Anordnung des Führungselementes 32 in dem axial ausgerichteten Endabschnitt 82 gewährleistet dabei zudem, dass die Greifelemente 20 nicht versehentlich aus der Stützstellung gelöst werden. Das Befestigungsmittel 50 wird somit während des Schraubvorganges jederzeit sicher geführt.

Alternativ zu den dargestellten Ausführungsformen ist es erfindungsgemäss auch möglich, auf die Schraubenfeder 70 zu verzichten. Dies hat den Vorteil, dass die Greifelemente 20 leichter aus der Freigabestellung in die Stützstellung verbracht werden können. Die Verlegung der Greifelemente 20 zurück in die Freigabestellung erfolgt dann allerdings nicht mehr selbsttätig, sondern durch das Andrücken der Rollen 40 gegen das Werkstück während des Schraubvorganges. Demzufolge bleiben die Rollen 40 auch während des gesamten Schraubvorganges in losem Kontakt mit dem Werkstück.

Ferner kann alternativ zu der Rasteinrichtung 56 mit der Schraubenfeder 70 auch eine zu dieser entgegen wirkenden Federkraft vorgesehen werden. Hierdurch nehmen die Greifelemente 20 im unbelasteten Zustand die Stützstellung ein. Die anliegende Federkraft muss dann beim Schraubvorgang überwunden werden, um die Greifbacken 38 zu öffnen.

## Patentansprüche

1. Haltevorrichtung (10) für Befestigungsmittel (50), die an einem Schraubgerät (2) festlegbar ist und mit der ein Befestigungsmittel (50), das in ein Werkzeugbit (46) einsetzbar ist, abstützbar ist, wobei die Haltevorrichtung (10) mindestens zwei Greifelemente (20) aufweist, die in einer Stützstellung an einem Schaft (74) des Befestigungsmittels (50) anlegbar sind und die durch eine Kraftbeaufschlagung in eine Freigabestellung verlegbar sind, in der sie vom Schaft (74) beabstandet sind, **dadurch gekennzeichnet, dass** die Greifelemente (20) mindestens einen Kontaktbereich aufweisen, der wenigstens in der Stützstellung den vordersten Anschlag der Haltevorrichtung (10) in Eintreibrichtung (22) des Schraubgerätes (2) für ein Werkstück bildet, wobei die Greifelemente (20) über das Werkstück mit einer kraft zur Verlegung der Greifelemente (20) in die Freigabestellung beaufschlagbar sind.

2. Haltevorrichtung nach Anspruch 1, **dadurch gekennzeichnet, dass** der mindestens eine Kontaktbereich durch mindestens eine Rolle (40) gebildet ist.

3. Haltevorrichtung nach Anspruch 2, **dadurch gekennzeichnet, dass** die Rolle (40) eine ballige Form aufweist.

4. Haltevorrichtung nach einem der Ansprüche 1 bis 3, **dadurch gekennzeichnet, dass** die Greifelemente (20) durch Greifarme gebildet sind, die jeweils über ein gegenüber einem Getriebeteil (4) des Schraubgerätes (2) axial verschiebliches Drehlager (18) sowie über eine Kulissenführung gelagert sind.

5. Haltevorrichtung nach Anspruch 4, **dadurch gekennzeichnet, dass** die Kulissenführung mindestens eine gekrümmte Führungsausnehmung (24) an dem jeweiligen Greifelement (20) aufweist, in die ein Führungselement (32) hineinragt, das bewegungsfest mit dem Getriebeteil (4) verbunden ist.

6. Haltevorrichtung nach Anspruch 5, **dadurch gekennzeichnet, dass** die Führungsausnehmung (24) zu einem ersten Ende (26) hin, an dem das Führungselement (32) in der Stützstellung der Greifelemente (20) angeordnet ist, die stärkste Krümmung aufweist.

7. Haltevorrichtung nach Anspruch 6, **dadurch gekennzeichnet, dass** das erste Ende (26) durch einen geraden Endabschnitt (82) gebildet ist, der in der Stützstellung im Wesentlichen parallel zur Eintreibrichtung (22) angeordnet ist.

8. Haltevorrichtung nach einem der Ansprüche 5 bis 7, **dadurch gekennzeichnet, dass** die Führungsausnehmung (24) zu einem zweiten Ende (28) hin, an dem das Führungselement (32) in der Freigabestellung der Greifelemente (20) angeordnet ist, einen geraden Abschnitt (30) aufweist.

9. Haltevorrichtung nach Anspruch 8, **dadurch gekennzeichnet, dass** der mindestens eine Kontaktbereich der Greifelemente (20) in Längsrichtung des geraden Abschnitts angeordnet ist.

10. Haltevorrichtung nach einem der Ansprüche 1 bis 9, **dadurch gekennzeichnet, dass** die Haltevorrichtung (10) eine Rasteinrichtung (56) aufweist, über die die Greifelemente (20) in einer vorbestimmten Rastposition, die der Stützstellung der Greifelemente (20) entspricht einrastbar sind und die durch eine zusätzliche Kraftbeaufschlagung des Kontaktbereiches lösbar ist.

11. Haltevorrichtung nach Anspruch 10, **dadurch gekennzeichnet, dass** die vorbestimmte Rastposition verstellbar ist.

12. Haltevorrichtung nach Anspruch 11, **dadurch gekennzeichnet, dass** die Rasteinrichtung (56) durch ein gegenüber dem Getriebeteil (4) in verschiedenen Positionen festlegbares Rastaufnahmeelement (58) gebildet ist, entlang dessen ein Schiebeelement (14) geführt ist, das mit den axial verschieblichen Drehlagern (18) der Greifelemente (20) gekuppelt ist und das eine Ausnehmung (66) aufweist, in die ein Rastelement (64), das an dem Schiebelement (14) verschieblich gelagert ist und gegen das Rastaufnahmeelement (58) vorgespannt ist, in der Stützposition der Greifelemente (20) einrastet.

13. Haltevorrichtung nach einem der Ansprüche 1 bis 12, **dadurch gekennzeichnet, dass** die Greifelemente (20) in die Freigabeposition vorgespannt sind.

14. Haltevorrichtung nach Anspruch 12 **dadurch gekennzeichnet, dass** die Greifelemente in die Freigabeposition vorgespannt sind, und dass die Vorspannung durch eine Schraubenfeder (70) erfolgt, die auf das Rastaufnahmeelement (58) aufgeschoben ist und sich einerseits am Schiebelement (14) und andererseits an dem Getriebeteil (4) abstützt.

15. Haltevorrichtung nach einem der Ansprüche 5 bis 14, **dadurch gekennzeichnet, dass** mindestens ein Greifelement (20) in einem Bereich, der an den Schaft (74) des Befestigungsmittels (50) anlegbar ist, eine Greifbacke (38) aufweist, wobei das Greifelement (20) zwischen der Greifbacke (38) und der Führungsausnehmung (24) einen Federbereich (80) aufweist.

16. Haltevorrichtung nach Anspruch 15, **dadurch gekennzeichnet, dass** die Greifbacke eine lösbare Verbindung mit dem übrigen Greifelement (20) aufweist.

17. Haltevorrichtung nach Anspruch 16, **dadurch gekennzeichnet, dass** die Greifbacke (38) eine keilförmige Ausnehmung (39) aufweist.

18. Haltevorrichtung nach einem der Ansprüche 1 bis 17, **dadurch gekennzeichnet, dass** das Werkzeugbit (46) eine Klemmvorrichtung aufweist, die einen Reibschluss mit einem in das Werkzeugbit (46) eingesteckten Kopf (54) des Befestigungsmittels (50) ausbildet.

## Claims

1. Holding device (10) for fasteners (50), which holding device (10) can be fixed to a fastener driving tool (2) and with which a fastener (50) which is insertable in a tool bit (46) can be supported, the holding device (10) having at least two gripping elements (20) which can be applied to a shaft (74) of the fastener (50) in a support position and can be moved by the application of a force to a release position in which said gripping elements (20) are spaced from the shaft (74), **characterised in that** the gripping elements (20) have at least one contact region which, at least in the support position, forms for a workpiece the leading stop of the holding device (10) in the insertion direction (22) of the fastener driving tool (2), it being possible to apply a force to the gripping elements (20) via the workpiece in order to move the gripping elements (20) to the release position.

2. Holding device according to Claim 1, **characterised in that** the at least one contact region is formed by at least one roller (40).

3. Holding device according to Claim 2, **characterised in that** the roller (40) has a crowned shape.

4. Holding device according to any one of Claims 1 to 3, **characterised in that** the gripping elements (20) are formed by gripping arms which are each mounted by means of a respective pivot bearing (18), which can be displaced axially with respect to a transmission part (4) of the fastener driving tool (2), and by means of a guide slot.

5. Holding device according to Claim 4, **characterised in that** the guide slot comprises at least one curved guide recess (24) in the respective gripping element (20), into which recess (24) there projects a guide element (32) connected in a non-movable manner to the transmission part (4).

6. Holding device according to Claim 5, **characterised in that** the guide recess (24) has the greatest curvature towards a first end (26) at which the guide element (32) is arranged in the support position of the gripping elements (20).

7. Holding device according to Claim 6, **characterised in that** the first end (26) is formed by a straight end section (82) which is arranged substantially parallel to the insertion direction (22) in the support position.

8. Holding device according to any one of Claims 5 to 7, **characterised in that** the guide recess (24) has a straight section (30) towards a second end (28) at which the guide element (32) is arranged in the release position of the gripping elements (20).

9. Holding device according to Claim 8, **characterised in that** the at least one contact region of the gripping elements (20) is arranged in the longitudinal direction of the straight section.

10. Holding device according to any one of Claims 1 to 9, **characterised in that** the holding device (10) has a latching device (56) by means of which the gripping elements (20) can be latched in a predetermined latching position which corresponds to the support position of the gripping elements (20) and can be released by the application of an additional force to the contact region.

11. Holding device according to Claim 10, **characterised in that** the predetermined latching position is adjustable.

12. Holding device according to Claim 11, **characterised in that** the latching device (56) is formed by a catch-receiving element (58) which can be fixed in different positions with respect to the transmission part (4) and along which a slide element (14) is guided, which slide element (14) is coupled to the axially displaceable pivot bearings (18) of the gripping elements (20) and has a recess (66) into which a catch element (64), which is mounted displaceably on the slide element (14) and is preloaded against the catch-receiving element (58), latches in the support position of the gripping elements (20).

13. Holding device according to any one of Claims 1 to 12, **characterised in that** the gripping elements (20) are preloaded to the release position.

14. Holding device according to Claim 12, **characterised in that** the gripping elements are preloaded to the release position and **in that** the preload is effected by a helical spring (70) which is fitted on to the catch-receiving element (58) and which bears at one end against the slide element (14) and at the other end against the transmission part (4).

15. Holding device according to any one of Claims 5 to 14, **characterised in that** at least one gripping element (20) has a gripping jaw (38) in a region which can be applied to the shaft (74) of the fastener (50), the gripping element (20) having a resilient region (80) between the gripping jaw (38) and the guide recess (24).

16. Holding device according to Claim 15, **characterised in that** the gripping jaw has a releasable connection to the rest of the gripping element (20).

17. Holding device according to Claim 16, **characterised in that** the gripping jaw (38) has a wedge-shaped recess (39).

18. Holding device according to any one of Claims 1 to 17, **characterised in that** the tool bit (46) has a clamping device which forms a frictional engagement with a head (54) of the fastener (50), which head (54) is inserted in the tool bit (46).

## Revendications

1. Dispositif de retenue (10) pour un élément de fixation (50) qui peut être immobilisé sur un appareil de vissage (2) et qui permet de supporter un élément de fixation (50) pouvant être inséré dans un embout d'outil (46), le dispositif de retenue (10) comportant au moins deux éléments de saisie (20) qui, dans une position de support, peuvent porter sur une tige (74) de l'élément de fixation (50) et qui, par l'application d'une force, peuvent être amenés dans une position de libération dans laquelle ils sont à distance de la tige (74), **caractérisé en ce que** les éléments de saisie (20) comportent au moins une zone de contact qui forme pour une pièce, au moins dans la position de support, la butée la plus en avant du dispositif de retenue (10) dans une direction d'enfoncement (22) de l'appareil de vissage (2), dans lequel, dans la position de libération, une force peut être appliquée aux éléments de saisie (20) par l'intermédiaire de la pièce pour le déplacement des éléments de saisie (20).

2. Dispositif de retenue selon la revendication 1, **caractérisé en ce que** la au moins une zone de contact est formée par au moins un rouleau (40).

3. Dispositif de retenue selon la revendication 2, **caractérisé en ce que** le rouleau (40) a une forme bombée.

4. Dispositif de retenue selon l'une quelconque des revendications 1 à 3, **caractérisé en ce que** les éléments de saisie (20) sont formés par des bras de saisie qui sont respectivement supportés par un palier rotatif (18) pouvant être axialement déplacé par rapport à une partie d'engrenage (4) de l'appareil de vissage (2), ainsi que par un guide de coulisse.

5. Dispositif de retenue selon la revendication 4, **caractérisé en ce que** le guide de coulisse comporte au moins un évidement de guidage incurvé (24) sur l'élément de saisie respectif (20), évidement dans lequel fait saillie un élément de guidage (32) qui est relié à la partie d'engrenage (4) sans possibilité de mouvement.

6. Dispositif de retenue selon la revendication 5, **caractérisé en ce que** l'évidement de guidage (24) présente la plus grande courbure vers une première extrémité (26) au niveau de laquelle l'élément de guidage (32) est agencé dans la position de support des éléments de saisie (20).

7. Dispositif de retenue selon la revendication 6, **caractérisé en ce que** la première extrémité (26) est formée par une portion d'extrémité rectiligne (82) qui est agencée sensiblement parallèle à la direction d'enfoncement (22) dans la position de support.

8. Dispositif de retenue selon l'une quelconque des revendications 5 à 7, **caractérisé en ce que** l'évidement de guidage (24) comporte une portion rectiligne (30) vers une seconde extrémité (28) au niveau de laquelle l'élément de guidage (32) est agencé dans la position de libération des éléments de saisie (20).

9. Dispositif de retenue selon la revendication 8, **caractérisé en ce que** la au moins une zone de contact des éléments de saisie (20) est agencée dans une direction longitudinale de la portion rectiligne.

10. Dispositif de retenue selon l'une quelconque des revendications 1 à 9, **caractérisé en ce que** le dispositif de support (10) comporte un dispositif d'arrêt (56) par l'intermédiaire duquel les éléments de saisie (20) peuvent s'arrêter dans une position d'arrêt prédéterminée qui correspond à la position de support des éléments de saisie (20), et qui peuvent être libérés en appliquant une force supplémentaire sur la zone de contact.

11. Dispositif de retenue selon la revendication 10, **caractérisé en ce que** la position d'arrêt prédéterminée est réglable.

12. Dispositif de retenue selon la revendication 11, **caractérisé en ce que** le dispositif d'arrêt (56) est formé par un élément à encoche d'arrêt (58) pouvant être immobilisé dans différentes positions par rapport à la partie d'engrenage (4), le long duquel un élément de déplacement (14) est guidé, ledit élément étant couplé aux paliers rotatifs (18) pouvant être déplacés axialement des éléments de saisie (20) et comportant un évidement (66) dans lequel un élément d'arrêt (64), qui est supporté de manière mobile par l'élément de déplacement (14) et est préchargé contre l'élément à encoche d'arrêt (58), vient en prise dans la position de support des éléments de saisie (20).

13. Dispositif de retenue selon l'une quelconque des revendications 1 à 12, **caractérisé en ce que** les éléments de saisie (20) sont préchargés dans la position de libération.

14. Dispositif de retenue selon la revendication 12, **caractérisé en ce que** les éléments de saisie sont préchargés dans la position de libération, et **en ce que** la précharge est réalisée par un ressort hélicoïdal (70) qui est poussé sur l'élément à encoche d'arrêt (58) et qui est supporté d'un côté par l'élément de déplacement (14) et de l'autre côté par la partie d'engrenage (4).

15. Dispositif de retenue selon l'une quelconque des revendications 5 à 14, **caractérisé en ce qu'**au moins un élément de saisie (20) comporte une mâchoire de saisie (38) dans une zone qui peut porter sur la tige (74) de l'élément fixation (50), l'élément de saisie (20) comportant une zone élastique (80) entre la mâchoire de saisie (38) et l'évidement de guidage (24).

16. Dispositif de retenue selon la revendication 15, **caractérisé en ce que** la mâchoire de saisie a une liaison amovible avec l'élément de saisie restant (20).

17. Dispositif de retenue selon la revendication 16, **caractérisé en ce que** la mâchoire de saisie (38) comporte un évidement en forme de coin (39).

18. Dispositif de retenue selon l'une quelconque des revendications 1 à 17, **caractérisé en ce que** l'embout d'outil (46) comporte un dispositif de serrage qui crée un assemblage par friction avec une tête (54) enfichée dans l'embout d'outil (46) de l'élément de fixation (50).
